# EUROPÄISCHE PATENTSCHRIFT

(11) **EP 0 553 092 B1**
(45) Veröffentlichungstag und Bekanntmachung des Hinweises auf die Patenterteilung: **28.09.1994**
(21) Anmeldenummer: 91913678.8
(22) Anmeldetag: 29.07.1991
(51) Int. Cl.: B32B 17/04, B32B 17/12

(54) **PLATTEN- ODER SCHALENFÖRMIGES BAUTEIL**
PANEL OR SHELL-LIKE STRUCTURAL COMPONENT
ELEMENT DE CONSTRUCTION EN FORME DE PANNEAU OU DE COQUE

(30) Priorität: 19.10.1990 DE 4033270
(43) Veröffentlichungstag der Anmeldung: 04.08.1993
(73) Patentinhaber: PEBRA GmbH Paul Braun, 73704 Esslingen (DE)
(72) Erfinder: LUDWIG, Hans-Joachim, D-7441 Schlaitdorf (DE); LANG, Gusztav, D-8000 München 60 (DE)
(74) Vertreter: Wolf, Eckhard, Dr.-Ing.
(86) Internationale Anmeldenummer: EP9101419
(87) Internationale Veröffentlichungsnummer: WO9206845

(56) Entgegenhaltungen:
- DE-A- 3 021 428
- GB-A- 1 443 754
- US-A- 4 828 910
- World Patent Index (Latest), Acc. No. 89-064907, week 9, Derwent Publication Ltd, London, GB; & JP,A, 1016619

## Beschreibung

Die Erfindung betrifft ein platten- oder schalenförmiges Bauteil, das hohen Belastungen ausgesetzt werden kann.

In Personenkraftwagen besteht häufig das Bedürfnis, den Kofferraum zeitweilig in den Fahrgastraum hinein zu erweitern, um sperrige Güter transportieren zu können. Um eine Durchlademöglichkeit zu schaffen, ist eine klappbare Rückenlehne erforderlich, die von der selbsttragenden Karosseriekonstruktion getrennt ist und die deshalb einer zusätzlichen Stabilisierung bedarf, um Sicherheitsnormen im Rückenlehnenbereich zu entsprechen. Eine der Sicherheitsnormen schreibt beispielsweise vor, daß ein Prüfkörper mit einem Gewicht von 18 kg und geometrisch vorgeschriebenen Raumform- und Kantenabmessungen bei einer Relativgeschwindigkeit von 40 km/h die in Sitzposition befindliche Rückenlehne vom Kofferraum her nicht in den Fahrgastraum hinein durchbrechen darf. Um diese Norm zu erfüllen, wurden bisher vor allem ein- oder zweischalige, mit Sicken oder Wellen versehene Blechkonstruktionen vorgeschlagen, die mit einer zum Kofferraum zeigenden dekorativen Rückwand versehen sind. Die effektive Wandstärke dieser Bauteile beträgt bei den bekannten Konstruktionen zwischen ca. 22 und 35 mm mit einem Gesamtgewicht zweier Klapplehnen von ca. 10 kg. Weiter wurde bereits versucht, die Rückenlehne aus einem thermoplastischen Kunststoffmaterial (Polypropylen) mit Glasmattenverstärkung in einschaliger Bauweise herzustellen. Diese Konstruktion hat sich unter den genannten Normbedingungen jedoch nicht als ausreichend erwiesen.

Weiter ist es in der RIM-Technik (Reaction-Injection-Molding - Reaktionsschäumen) mit Polyurethan an sich bekannt, flächige Verstärkungsstoffe, wie Glasfasermatten, in das Formwerkzeug einzulegen und im Zuge des Einspritzvorgangs mit dem Reaktionsgemisch zu durchtränken.

Der Erfindung liegt die Aufgabe zugrunde, ein platten- oder schalenförmiges Bauteil zu entwickeln, das sowohl hohen statischen als auch dynamischen Belastungen ausgesetzt werden kann.

Zur Lösung dieser Aufgabe wird gemäß der Erfindung ein Bauteil aus einem Reaktionskunststoff mit einer in diesen eingebetteten schichtförmigen Verstärkung folgenden Aufbaus vorgeschlagen:
- eine erste und eine zweite Außenschicht aus elastisch dehnbarem organischem Fasermaterial,
- je eine an die Innenfläche der ersten bzw. zweiten Außenschicht angrenzende erste und zweite Glasfaserschicht und
- eine im Inneren zwischen den beiden Glasfaserschichten angeordnete kompressible Abstandsschicht,
wobei alle Schichten mit einem beim Ausschäumen den Reaktionskunststoff bildenden niedrigviskosen Reaktionsgemisch durchtränkbar sind.

Den beiden Außenschichten, die vorzugsweise als Gewebe oder Waffelgewebe aus elastisch dehnbaren organischen Fasern, wie Polyethylen- oder Polyesterfasern bestehen, kommt vor allem die Aufgabe zu, Stoßbelastungen elastisch oder plastisch aufzunehmen und dadurch eine Bruch- oder Rißbildung zu verhindern. Die organischen Fasern weisen zu diesem Zweck beispielsweise einen Durchmesser von 0,3 bis 0,8 mm, im Falle von Polyethylen vorzugsweise von 0,5 mm auf.

Die an die Innnenfläche der Außenschichten angrenzenden Glasfaserschichten haben vor allem eine Aussteifungsfunktion zur Aufnahme von statischen Belastungen. Um hohe Zugkräfte aufnehmen zu können, wird mindestens eine der Glasfaserschichten aus zwei kreuzweise miteinander vernähten Unidirekionalgelegen, einem sogenannten Roving-Gelege gebildet. Bei geringeren Anforderungen an die Zugbelastung kann hierfür auch ein Glasfasergewebe verwendet werden. Dagegen wird auf der vornehmlich Druckbelastungen ausgesetzten Bauteilseite vorzugsweise eine Glasfasermatte mit im wesentlichen isotroper (wirrer) Glasfaseranordnung als Glasfaserschicht verwendet.

Die vorteilhafterweise als lockere vliesartige Matte aus punktweise miteinander verbundenen, vorzugsweise miteinander verschweißten Kunstfasern bestehende kompressible Abstandsschicht hat vor allem im Zuge der Herstellung des Bauteils die Aufgabe, die Schichtstruktur unter einem gewissen Kraftschluß gegen die Formwand zu halten, so daß sie beim Formfüllvorgang nicht durch das flüssige Reaktionsgemisch innerhalb des Formwerkzeugs verschoben wird. Weiter sollen dadurch die statisch und dynamisch wirksamen Außen- und Glasfaserschichten außerhalb der neutralen Biegefaser des Bauteils gehalten werden. Außerdem kann das Bauteil durch mehr oder weniger starkes Zusammendrücken der kompressiblen Abstandsschicht in seiner Wandstärke ohne Stabilitätseinbuße in einem weiten Bereich durch entsprechene Ausbildung der Kavität des Formwerkzeugs variiert werden. Die kompressible Abstandsschicht besteht vorteilhafterweise aus Polyamidfasern in einer lockeren wirren Anordnung, wobei die Fasern zweckmäßig einen Durchmesser von 0,5 bis 1,3 mm, vorzugsweise 0,8 bis 1 mm aufweist.

Um eine hohe Bauteilstabilität zu erhalten, ist es wichtig, daß das den Reaktionskunststoff bildende Reaktionsgemisch die Verstärkungsschichten vollständig durchtränkt. Zu diesem Zweck sollte die Viskosität des Reaktionsgemischs anfänglich nicht mehr als 5000 mPs, vorzugsweise zwischen 100 und 1000 mPs betragen. Dies ist beispielsweise für Polyol und Isocyanat als Ausgangsprodukte des Polyurethan der Fall. Vorteilhafterweise wird ein Reaktionskunststoff aus der Gruppe Polyurethan, Polyharnstoff, Epoxidharz, Polyisocyanurat gewählt.

Gemäß einer vorteilhaften Ausgestaltung der Erfindung grenzt an mindestens eine der Außenschichten außenseitig eine für das flüssige Reaktionsgemisch undurchlässige Dekorschicht an. Diese Dekorschicht kann beispielsweise als Kunststoffolie oder als innenseitig flüssigkeitsdicht beschichteter oder als flüssigkeitsdicht imprägnierter Textilteppich ausgebildet sein.

Für Montagezwecke ist es von Vorteil, wenn im Bereich einer der Glasfaserschichten mindestens eine schichtparallel verlaufende, über den Bauteilrand überstehende Tragstruktur in das Bauteil eingebettet ist. Die Tragstruktur kann dabei beispielsweise als beidseitig über den Bauteilrand überstehende Metallwelle ausgebildet sein, die im Falle einer Klapplehne als Lagerwelle verwendet werden kann.

Weitere vorteilhafte Montagemöglichkeiten ergeben sich dadurch, daß eine der Außenschichten zusammen mit der an sie angrenzenden Glasfaserschicht die übrigen Schichten randseitig übergreift, wobei der übergreifende Rand der Außen- und Glasfaserschichten unter Freilassung eines randoffenen Kanals gegenüber den übrigen Schichten abgebogen sein kann. Die außenseitig an den übrigen Schichten angeordneten Dekorschicht kann dabei schichtübergreifend in den Kanal eingreifen, während in dem Kanal ein Dekor- oder Polsterüberzug mittels eines elastomeren Keders randseitig festklemmbar ist.

Das erfindungsgemäße Bauteil läßt sich mit besonderem Vorteil als kombinierte Kofferraum-Trennwand und umklappbare Rückenlehne eines Kraftfahrzeugs verwenden, wobei die Dekorschicht zweckmäßig kofferraumseitig und das zugaufnehmende Roving-Gelege bzw. Glasfasergewebe fahrgastraumseitig angeordnet sein sollte.

Das erfindungsgemäße Bauteil kann ferner als überrollfähiges Kraftfahrzeugdach, als Unterfahrschutz oder Dachspoiler eines Lastkraftwagens, als Biegeträger eines Stoßfängers oder als Stoßfänger mit integriertem Biegeträger für Kraftfahrzeuge verwendet werden.

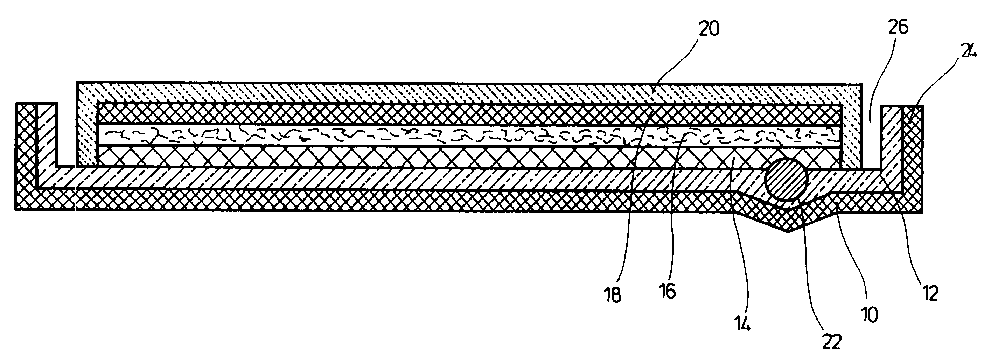

Im folgenden wird die Erfindung anhand eines in der Zeichnung in schematischer Weise dargestellten Ausführungsbeispiels näher erläutert:

Die einzige Figur zeigt einen Schnitt durch die Verstärkungsstruktur eines Bauteils für Klapplehnen in Kraftfahrzeugen. Klapplehnen dieser Art haben in aufgerichteter Stellung zugleich die Funktion einer Kofferraumtrennwand, die dafür sorgt, daß im Kofferraum befindliche lose Teile auch bei einem Unfall von einem Eindringen in den Fahrgastraum abgehalten werden.

Die Verstärkungsstruktur des Bauteils weist folgenden Aufbau auf:
- eine im eingebauten Zustand der Rückenlehne zum Fahrgastraum weisende, als Waffelgewebe ausgebildete Außenschicht 10 aus Polyethylen-Fäden mit einem Fadendurchmesser von ca. 0,5 mm, die aufgrund der elastischen Eigenschaften des Polyethylen Stoßbelastungen federnd aufnehmen kann;
- eine als Roving-Gelege ausgebildete Glasfaserschicht 12, die aufgrund der unidirektionalen Ausrichtung ihrer kreuzweise miteinander vernähten Faserbündel hohen Zugbelastungen in den Faserrichtungen ausgesetzt werden kann;
- eine aus Polyamidfäden in vliesartiger Anordnung bestehende, zentral angeordnete Abstandsschicht 14, die die Einstellung unterschiedlicher Wandstärken im Bauteil ermöglicht und der eine Abstandshaltefunktion innerhalb der Schichtstruktur zukommt;
- eine zweite Glasfaserschicht 16 mit im wesentlichen isotroper (wirrer) Ausrichtung der Glasfasern zur Aussteifung insbesondere auf der Druckseite des Bauteils;
- eine zweite, als Waffelgewebe ausgebildete Außenschicht 18 aus Polyethylenfasern mit elastischen Stoßfängereigenschaften;
- eine kofferraumseitig an der Außenseite der Außenschicht 18 angeordete Dekorschicht 20, die beispielsweise als Kunststoffolie oder als mit einem flüssigkeitsdichten inneren Überzug oder einer entsprechenden Imprägnierung versehener Teppich ausgebildet sein kann.

Die Verstärkungsstruktur weist im Bereich aller Schichten eine ausreichende Porosität auf, so daß sie mit einem beim Auschäumen den Reaktionskunststoff bildenden niedrigviskosen Reaktionsgemisch durchtränkbar ist.

Im Bereich der ersten Glasfaserschicht ist zusätzlich eine Metallwelle 22 eingebettet, die an ihren Enden über das Bauteil übersteht und eine Lagerwelle für die Klapplehne bildet.

Die Ränder der ersten Außenschicht 10 und der ersten Glasfaserschicht 12 stehen gemeinsam über die Ränder der übrigen Schichten 14, 16, 18 über und sind an ihren Enden so senkrecht in Richtung Kofferraum gebogen, daß ein umlaufender Kanal 26 freibleibt.

Zur Herstellung des Bauteils wird die Verstärkungsstruktur in der beschriebenen Reihenfolge in die Kavität eines nicht dargestellten Formwerkzeugs eingelegt und über einen Anguß beispielsweise im zentralen Bereich der Außenschicht 10 mit einem flüssigen Reaktionsgemisch, beispielsweise aus Polyol und Isocyanat, beaufschlagt. Dabei wird die Schichtstruktur von dem Reaktionsgemisch durchtränkt, so daß im Zuge des anschließenden Ausschäumvorgangs eine innige Verbindung mit dem entstehenden Reaktionskunststoff entsteht. Die Wandstärke des Bauteils beträgt typischerweise ca 12 bis 14 mm, so daß sich ein Gesamtgewicht für die zwei Klapplehnen eines PKW von etwa 6 kg ergibt. Untersuchungen haben gezeigt, daß das Bauteil einer Beschleunigung des Normprüfkörpers (18 kg) auf 32 g standzuhalten vermag. Der Kanal 26 bleibt frei und kann als Kederkanal zur Befestigung eines das Bauteil auf der Seite der Außenschicht 10 übergreifenden Überzugs oder Polsters mit Hilfe eines elastomeren Keders verwendet werden.

## Patentansprüche

1. Platten- oder schalenförmiges Bauteil aus einem Reaktionskunststoff mit einer in diesen eingebetteten Verstärkungsstruktur folgenden Aufbaus:
- eine erste und eine zweite Außenschicht (10;18) aus elastisch dehnbarem organischem Fasermaterial,
- je eine an die Innenfläche der ersten bzw. zweiten Außenschicht (10;18) angrenzende erste und zweite Glasfaserschicht (12,16) und
- eine im Inneren zwischen den beiden Glasfaserschichten (12,16) angeordnete kompressible Abstandsschicht (14),
wobei alle Schichten mit einem beim Ausschäumen den Reaktionskunststoff bildenden niedrigviskosen Reaktionsgemisch durchtränkbar sind.

2. Bauteil nach Anspruch 1, **dadurch gekennzeichnet**, daß mindestens eine der Außenschichten (10,18) als Gewebe, vorzugsweise als Waffelgewebe ausgebildet ist.

3. Bauteil nach Anspruch 1 oder 2, **dadurch gekennzeichnet**, daß die organischen Fasern der Außenschichten (10,18) aus Polyethylen oder Polyester bestehen.

4. Bauteil nach einem der Ansprüche 1 bis 3, **dadurch gekennzeichnet**, daß der Durchmesser der organischen Fasern 0,3 bis 0,8 mm, vorzugsweise ca. 0,5 mm beträgt.

5. Bauteil nach einem der Ansprüche 1 bis 4, **dadurch gekennzeichnet**, daß mindestens eine der Glasfaserschichten (12) aus zwei kreuzweise zueinander angeordneten und vorzugsweise miteinander vernähten Unidirektionalgelegen besteht (Roving-Gelege).

6. Bauteil nach einem der Ansprüche 1 bis 5, **dadurch gekennzeichnet**, daß mindestens eine der Glasfaserschichten (12) als Glasfasergewebe ausgebildet ist.

7. Bauteil nach einem der Ansprüche 1 bis 6, **dadurch gekennzeichnet**, daß mindestens eine der Glasfaserschichten (16) durch eine Matte mit im wesentlichen isotroper Glasfaserverteilung gebildet ist.

8. Bauteil nach einem der Ansprüche 1 bis 7, **dadurch gekennzeichnet**, daß die Abstandsschicht (14) als lockere vliesartige Matte aus punktweise miteinander verbundenen, vorzugsweise miteinander verschweißten Kunstfasern besteht.

9. Bauteil nach einem der Ansprüche 1 bis 8, **dadurch gekennzeichnet**, daß die kompressible Abstandsschicht (14) aus Polyamidfasern in lockerer, wirrer Anordnung besteht.

10. Bauteil nach Anspruch 9, **dadurch gekennzeichnet**, daß die Polyamidfasern einen Durchmesser von 0,5 bis 1,3 mm, vorzugsweise 0,8 bis 1 mm aufweisen.

11. Bauteil nach einem der Ansprüche 1 bis 10, **dadurch gekennzeichnet**, daß das Reaktionsgemisch eine Viskosität von anfänglich 100 bis 1000 mPas aufweist.

12. Bauteil nach einem der Ansprüche 1 bis 11, **dadurch gekennzeichnet**, daß das Reaktionsgemisch Polyol und Isocyanat enthält.

13. Bauteil nach einem der Ansprüche 1 bis 12, **gekennzeichnet durch** einen Reaktionskunststoff aus der Gruppe Polyurethan, Polyharnstoff, Epoxidharz, Polyisocyanurat.

14. Bauteil nach einem der Ansprüche 1 bis 13, **dadurch gekennzeichnet**, daß an mindestens eine der Außenschichten (18) außenseitig eine flüssigkeitsundurchlässige Dekorschicht (20) angrenzt.

15. Bauteil nach Anspruch 14, **dadurch gekennzeichnet**, daß die Dekorschicht (20) als Kunststoffolie oder als innenseitig flüssigkeitsdicht beschichteter oder als flüssigkeitsdicht imprägnierter Textilteppich ausgebildet ist.

16. Bauteil nach einem der Ansprüche 1 bis 15, **dadurch gekennzeichnet**, daß im Bereich einer der Glasfaserschichten (12) mindestens eine schichtparallel verlaufende, über den Bauteilrand überstehende Tragstruktur (22) eingebettet ist.

17. Bauteil nach Anspruch 16, **dadurch gekennzeichnet**, daß die Tragstruktur als beidseitig über den Bauteilrand überstehende Metallwelle (22) ausgebildet ist.

18. Bauteil nach einem der Ansprüche 1 bis 17, **dadurch gekennzeichnet**, daß eine der Außenschichten (10) zusammen mit der an sie angrenzenden Glasfaserschicht (12) die übrigen Schichten (14,16,18) randseitig übergreift.

19. Bauteil nach Anspruch 18, **dadurch gekennzeichnet**, daß der übergreifende Rand der Außen- und Glasfaserschichten (10,12) unter Freilassung eines randoffenen Kanals (26) gegenüber den übrigen Schichten (14, 16,18) abgebogen ist.

20. Bauteil nach Anspruch 19, **dadurch gekennzeichnet**, daß die außenseitig an den übrigen Schichten (14,16, 18) angeordnete Dekorschicht (20) in den Kanal (26) eingreift.

21. Bauteil nach Anspruch 19 oder 20, **dadurch gekennzeichnet**, daß in dem Kanal (26) ein Dekor- oder Polsterüberzug mittels eines elastomeren Keders randseitig festklemmbar ist.

22. Verwendung des Bauteils nach einem der Ansprüche 1 bis 21 als kombinierte Kofferraumtrennwand und umklappbare Rückenlehne eines Kraftfahrzeugs.

23. Verwendung nach Anspruche 22, **dadurch gekennzeichnet**, daß die Dekorschicht (20) kofferraumseitig und das Roving-Gelege bzw. Glasfasergewebe fahrgastraumseitig angeordnet sind.

24. Verwendung des Bauteils nach einem der Ansprüche 1 bis 21 als Kraftfahrzeugdach.

25. Verwendung des Bauteils nach einem der Ansprüche 1 bis 21 als Unterfahrschutz oder Dachspoiler eines Lastkraftwagens.

26. Verwendung des Bauteils nach einem der Ansprüche 1 bis 21 als Biegeträger eines Stoßfängers oder als Stoßfänger mit integriertem Biegeträger für Kraftfahrzeuge.

## Claims

1. Panel or shell-like structural component made of a reaction plastic with a reinforcement structure embedded in it, of the following construction :
- a first and a second outer layer (10; 18) of flexibly extensible organic fibre material
- a first and a second glass fibre layer (12, 16) each adjoining the internal surface of the first and/or second outer layer (10; 18) and
- a compressible distance layer (14) arranged inside between the two glass fibre layers (12, 16),
all layers being capable of impregnation with a low-viscosity reaction mixture forming the reaction plastic on foaming.

2. Structural component according to Claim 1, characterized in that at least one of the outer layers (10, 18) is constructed as woven fabric, preferably honeycomb woven fabric.

3. Structural component according to Claim 1 or 2, characterized in that the organic fibres of the outer layers (10, 18) comprise polyethylene or polyester.

4. Structural component according to one of Claims 1 to 3, characterized in that the diameter of the organic fibres is 0.3 to 0.8 mm, preferably approx. 0.5 mm.

5. Structural component according to one of Claims 1 to 4, characterized in that at least one of the glass fibre layers (12) comprises two uni-directional layers (roving layer) arranged crosswise with respect to each other and preferably sewn together.

6. Structural component according to one of Claims 1 to 5, characterized in that at least one of the glass fibre layers (12) is constructed as glass fibre woven fabric.

7. Structural component according to one of Claims 1 to 6, characterized in that at least one of the glass fibre layers (16) is formed by a mat with essentially isotropic glass fibre distribution.

8. Structural component according to one of Claims 1 to 7, characterized in that the distance layer (14) comprises loose fleece-like mat of synthetic fibres connected together point by point and preferably welded together.

9. Structural component according to one of Claims 1 to 8, characterized in that the compressible distance layer (14) comprises polyamide fibres in a loose, tangled arrangement.

10. Structural component according to Claim 9, characterized in that the polyamide fibres have a diameter of 0.5 to 1.3 mm, preferably 0.8 to 1 mm.

11. Structural component according to one of Claims 1 to 10, characterized in that the reaction mixture initially has a viscosity of 100 to 1000 mPas.

12. Structural component according to one of Claims 1 to 11, characterized in that the reaction mixture contains polyol and isocyanate.

13. Structural component according to one of Claims 1 to 12, characterized by a reaction plastic from the group polyurethane, polyurea, epoxy resin, polyisocyanurate.

14. Structural component according to one of Claims 1 to 13, characterized in that a decorative layer (20) which is impermeable to liquid adjoins at least one of the outer layers (18) on the outside.

15. Structural component according to Claim 14, characterized in that the decorative layer (20) is constructed as plastic film or as textile carpet impregnated so as to be liquid-tight or coated on the inside so as to be liquid-tight.

16. Structural component according to one of Claims 1 to 15, characterized in that at least one bearing structure (22) projecting over the edge of the structural component and running parallel to the layers is embedded in the region of one of the glass fibre layers (12).

17. Structural component according to Claim 16, characterized in that the bearing structure is constructed as a metal shaft (22) projecting over the edge of the structural component on both sides.

18. Structural component according to one of Claims 1 to 17, characterized in that one of the outer layers (10) together with the glass fibre layer (12) adjoining it overlaps the remaining layers (14, 16, 18) at the edges.

19. Structural component according to Claim 18, characterized in that the overlapping edge of the outer and glass fibre layers (10, 12) is bent, leaving an open-edge channel (26) free opposite the remaining layers (14, 16, 18).

20. Structural component according to Claim 19, characterized in that the decorative layer (20) arranged on the remaining layers (14, 16, 18) on the outside reaches into the channel (26).

21. Structural component according to Claim 19 or 20, characterized in that a decorative or padding cover can be clamped tight in the channel (26) at the edges by means of an elastomer strip.

22. Use of the structural component according to one of Claims 1 to 21 as a combined boot partition wall and folding backrest of a motor vehicle.

23. Use according to Claim 22, characterized in that the decorative layer (20) is arranged on the boot side and the roving layer and/or glass fibre woven fabric on the passenger compartment side.

24. Use of the structural component according to one of Claims 1 to 21 as a motor vehicle roof.

25. Use of the structural component according to one of Claims 1 to 21 as a roof damage protector or roof spoiler of a lorry.

26. Use of the structural component according to one of Claims 1 to 21 as a flexural support of a bumper or as a bumper with integral flexural support for motor vehicles.

## Revendications

1. Elément de construction en forme de panneau ou de coque constitué d'une matière plastique de réaction avec une couche de renforcement noyée dans celle-ci, qui présente la structure suivante :
- une première et une deuxième couches extérieures (10; 18) composées d'une matière fibreuse organique élastique,
- une première et une deuxième couches de fibres de verre (12; 16) avoisinant à chaque fois la surface intérieure de la première et respectivement de la deuxième couches extérieures (10; 18), et
- une couche d'écartement (14) compressible disposée à l'intérieur entre les deux couches de fibres de verre (12, 16),
toutes les couches pouvant être imprégnées d'un mélange réactionnel peu visqueux qui, lors du moussage, forme la matière plastique de réaction.

2. Elément de construction selon la revendication 1, caractérisé en ce qu'au moins l'une des couches extérieures (10; 18) est réalisée sous la forme d'un tissu, de préférence d'un tissu gaufré.

3. Elément de construction selon l'une des revendications 1 ou 2, caractérisé en ce que les fibres organiques des couches extérieures (10; 18) sont constituées de polyéthylène ou de polyester.

4. Elément de construction selon l'une des revendications 1 à 3, caractérisé en ce que le diamètre des fibres organiques est de 0,3 à 0,8 mm, de préférence d'environ 0,5 mm.

5. Elément de construction selon l'une des revendications 1 à 4, caractérisé en ce qu'au moins l'une des couches de fibres de verre (12) est constituée de deux nappes unidirectionnelles cousues en croix (stratifil de verre textile).

6. Elément de construction selon l'une des revendications 1 à 5, caractérisé en ce qu'au moins l'une des couches de fibres de verre (12) est conformée en tissu de fibres de verre.

7. Elément de construction selon l'une des revendications 1 à 6, caractérisé en ce qu'au moins l'une des couches de fibres de verre (16) est constituée par une nappe avec une distribution essentiellement isotrope des fibres.

8. Elément de construction selon l'une des revendications 1 à 7, caractérisé en ce que la couche d'écartement (14) est constituée par une nappe lâche en forme de voile formée par des fibres synthétiques reliées par points les unes aux autres, de préférence soudées entre elles.

9. Elément de construction selon l'une des revendications 1 à 8, caractérisé en ce que la couche d'écartement (14) compressible est constituée de fibres de polyamide agencées de manière lâche et embrouillée.

10. Elément de construction selon la revendication 9, caractérisé en ce que les fibres de polyamide présentent un diamètre de 0,5 à 1,3 mm, de préférence de 0,8 à 1 mm.

11. Elément de construction selon l'une des revendications 1 à 10, caractérisé en ce que le mélange réactionnel présente une viscosité initiale de 100 à 1000 mPas.

12. Elément de construction selon l'une des revendications 1 à 11, caractérisé en ce que le mélange réactionnel contient du polyol et de l'isocyanate.

13. Elément de construction selon l'une des revendications 1 à 12, caractérisé en ce que la matière plastique de réaction appartient au groupe polyuréthane, polycarbamide, résine époxyde, polyisocyanurate.

14. Elément de construction selon l'une des revendications 1 à 13, caractérisé en ce qu'une couche décorative (20) imperméable aux liquides avoisine extérieurement au moins l'une des couches extérieures (18).

15. Elément de construction selon la revendication 14, caractérise en ce que la couche décorative (20) est réalisée sous la forme d'une feuille de matière plastique ou d'une moquette textile munie intérieurement d'un revêtement étanche ou imprégnée de manière à assurer l'étanchéité aux liquides.

16. Elément de construction selon l'une des revendications 1 à 15, caractérisé en ce que dans la région de l'une des couches de fibres de verre (12) est encastrée au moins une structure porteuse (22) s'étendant parallèlement à la couche et dépassant du bord de l'élément de construction.

17. Elément de construction selon la revendication 16, caractérisé en ce que la structure porteuse est réalisée sous la forme d'une broche métallique (22) qui dépasse des deux côtés du bord de l'élément de construction.

18. Elément de construction selon l'une des revendications 1 à 17, caractérisé en ce que l'une des couches extérieures (10) recouvre, conjointement avec la couche de fibres de verre (12) qui l'avoisine, le bord des autres couches (14, 16, 18).

19. Elément de construction selon la revendication 18, caractérisé en ce que le bord de recouvrement de la couche extérieure et de la couche de fibres de verre (10, 12) est replié par rapport aux autres couches (14, 16, 18) en laissant subsister un canal (26) ouvert au bord.

20. Elément de construction selon la revendication 19, caractérisé en ce que la couche décorative (20) disposée à l'extérieur des autres couches (14, 16, 18) s'engage dans le canal (26).

21. Elément de construction selon l'une des revendications 19 ou 20, caractérisé en ce que, du côté bord, un revêtement décoratif ou de rembourrage peut être enserré dans le canal (26) au moyen d'un bourrelet élastomère.

22. Utilisation de l'élément de construction selon l'une des revendications 1 à 21 comme cloison de séparation combinée de coffre à bagages et de dossier rabattable d'un véhicule automobile.

23. Utilisation selon la revendication 22, caractérisée en ce que la couche décorative (20) est disposée du côté coffre à bagages et que le stratifil de verre textile et ou le tissu de fibres de verre est situé du côté habitacle.

24. Utilisation de l'élément de construction selon l'une des revendications 1 à 21 comme toit de véhicules automobiles.

25. Utilisation de l'élément de construction selon l'une des revendications 1 à 21 comme becquet ou spoiler de toit d'un camion.

26. Utilisation de l'élément de construction selon l'une des revendications 1 à 21 comme poutre de déformation d'un pare-chocs ou comme pare-chocs avec poutre de déformation intégrée pour véhicules automobiles.
